# EUROPÄISCHE PATENTSCHRIFT

(11) **EP 0 562 297 B1**
(45) Veröffentlichungstag und Bekanntmachung des Hinweises auf die Patenterteilung: **22.05.1996**
(21) Anmeldenummer: 93103005.0
(22) Anmeldetag: 26.02.1993
(51) Int. Cl.: A47J 31/46, A47J 31/057, A47J 31/54

(54) **Gerät zum Zubereiten von heissen Getränken**
Apparatus for the preparation of hot beverages
Appareil pour la préparation de boissons chaudes

(30) Priorität: 27.03.1992 DE 4209993; 27.03.1992 DE 4209994
(43) Veröffentlichungstag der Anmeldung: 29.09.1993
(73) Patentinhaber: Braun Aktiengesellschaft, Frankfurt am Main (DE)
(72) Erfinder: Lietz, Manfred, W-6369 Schöneck (DE); Eisenkolb, Erik, W-6000 Frankfurt am Main 60 (DE); Möthrath, Georg, W-6460 Gelnhausen (DE)

(56) Entgegenhaltungen:
- EP-A- 0 135 611
- DE-A- 3 615 683
- US-A- 5 042 519

## Beschreibung

Die Erfindung betrifft ein Gerät zum Zubereiten von heißen Getränken, wie Kaffee, Tee und dergleichen, mit einem Frischwasserbehälter, einem Filter zur Aufnahme eines Extrahiergutes, wie beispielsweise Kaffeemehl oder Teeblätter, aus dem das heiße Getränk in ein Auffanggefäß abfließt, wobei die Herstellung des heißen Getränks dadurch erfolgt, daß schubweise so oft Frischwasser aus dem Frischwasserbehälter über eine Verbindungsleitung in einen geschlossenen Boiler fließt, dort von einer Wärmequelle erhitzt und danach über ein Steigrohr dem Filter zugeführt wird, bis der Frischwasserbehälter entleert ist, wobei weiter in der Verbindungsleitung eine Ventileinrichtung angeordnet ist, mit der diese in Richtung des Frischwasserbehälters sperrbar ist und wobei der Boiler eine Verbindung zur Atmosphäre aufweist, in der ein in seiner Grundstellung offenes Entlüftungsventil angeordnet ist, das in Abhängigkeit von der Strömungsgeschwindigkeit des durch die Verbindung aus dem Boiler entweichenden Mediums in seine Schließstellung gelangt.

Bei Geräten, bei denen das Wasser kontinuierlich mittels eines Durchlauferhitzers erhitzt und in ständigem Fluß auf das Extrahiergut im Filter geführt wird, wird dabei jeweils nur eine kleine Menge des Wassers erhitzt, wobei die Temperatur des Wassers relativ niedrig liegt und dabei Schwankungen unterliegt. Das Extrahiergutes wird ständig nur von einer geringen Wassermenge durchströmt, was zu einer ungleichmäßigen Ausnutzung des Extrahiergut führt. Dies kann insbesondere bei der Zubereitung von Kaffee zu einer geschmacklichen Beeinträchtigung führen, da das Getränk, vor allem bei größeren Zubereitungsmengen, saurebetont ausfällt und sich während der Warmhaltezeit relativ schnell in eine bittere Geschmacksrichtung entwickeln kann.

Für die Zubereitung von Espresso werden Geräte eingesetzt, die anstelle eines Durchlauferhitzers mit einem Heißwasserboiler ausgestattet sind. Hierbei wird das gesamte erhitzte Wasser in kurzer Zeit mit Dampfdruck durch das Kaffeemehl gepresst. Dies führt zu einem spezifischen, mit der üblichen Kaffeezubereitung nicht vergleichbaren Aroma.

Aus geschmacklichen Gründen wird daher für die Zubereitung von Kaffee nach wie vor die Handfiltration geschätzt, bei der eine größere Wassermenge zum Sieden gebracht und anschließend das in einen Filter eingefüllte Kaffeemehl mit diesem gleichmäßig heißen Wasser in mehreren Portionen schwallweise übergossen wird. Das gesamte Kaffeemehl wird dadurch bei jedem Aufguß aufgewirbelt und gleichmäßig und vollständig vom heißen Wasser durchflutet, so daß seine Aromastoffe dabei gut erschlossen werden. Günstig für eine gleichmäßige Extraktion ist bei der Handfiltration außerdem, daß das Kaffeemehl zwischen jedem Aufguß Zeit zum Aufquellen hat.

Aus der DE-A-36 15 683 ist ein Gerät zum Zubereiten von heißen Getränken bekannt, das nach dem Prinzip der schwallartigen Heißwasserförderung größerer Mengen Wasser in den Filter arbeitet. Hierbei ist innerhalb des Boilers im Steigrohr eine Bohrung vorgesehen, durch die einerseits der Überdruck nach Austreiben des Wassers aus dem Boiler abgebaut werden soll und durch die andererseits der Boiler entlüftet wird, damit sich das in der Verbindungsleitung vom Frischwasserbehälter zum Boiler befindliche Ventil öffnen kann. Durch diese Anordnung ergeben sich verhältnismäßig lange Füll- bzw. Entleerungsvorgänge am Boiler, so daß das Zubereiten von heißen Getränken verhältnismäßig lange Zeit in Anspruch nimmt.

Schließlich ist aus der EP-A-0 135 611 ein Gerät zum Zubereiten von heißen Getränken der eingangs beschriebenen Art bekannt, bei dem einerseits sowohl die Ventileinrichtung wie das Entlüftungsventil kurz vor dem Entleerungsvorgang des Boilers dampfdruckabhängig schließen, und bei dem andererseits beim Füllvorgang des Boilers mit Wasser beide Ventile mit der Atmosphäre ständig verbunden sind. Dies führt zu einer verhältnismäßig lang andauernden schubweisen Heißwasserförderung.

Der Erfindung liegt die Aufgabe zugrunde, ein Gerät der eingangs genannten Art mit einfachen Mitteln zu schaffen, bei dem die schubweise Heißwasserförderung beschleunigt wird.

Diese Aufgabe wird erfindungsgemäß dadurch gelöst, daß im Steigrohr ein Ventil und daß in der Verbindung ein weiteres, dem Entlüftungsventil nachgeschaltetes Ventil angeordnet sind und daß beide Ventile bei einem im Boiler entstehenden Unterdruck in ihrer Schließstellung gehalten werden. Nach dem ersten Brühzyklus, d.h., wenn im Boiler das Wasser kocht, wird dieses schwallartig über das Steigrohr dem Filter zugeführt, bis der Boiler entleert ist. Danach öffnet wieder die Ventileinrichtung und sobald die ersten Wassertropfen in den Boiler eingetropft sind, bildet sich aufgrund der eintretenden Kondensation des im Boiler befindlichen Heißdampfes ein Vakuum im Boiler, so daß beide Ventile schlagartig schließen und die Verbindung zur Atmosphäre unterbrechen. Dies führt dazu, daß neues Frischwasser aus dem Frischwsserbehälter über die Ventileinrichtung sehr rasch in den Boiler eingesaugt wird, so daß sich hierdurch die Zubereitungsdauer insgesamt verkürzt, da der Füllvorgang erheblich weniger Zeit in Anspruch nimmt.

Dabei ist es vorteilhaft, daß beide Ventile von Rückschlagventilen gebildet werden, die bei Unterdruck im Boiler den Eintritt von Luft verhindern. Dabei werden die Ventile von durch Schwerkraft in Richtung auf den Boiler schließenden Rückschlagventilen gebildet, die in ihrem Aufbau besonders einfach und in ihrer Funktion störunanfällig arbeiten.

Um das beim Aufheizen des Boilers durch Ausdehnung überschüssige und über das Entlüftungsrohr abfließende Wasser wieder auffangen zu können, ist in einer Weiterbildung der Erfindung vorgesehen, daß die Verbindung aus einem innerhalb des Frischwasserbehälters verlaufenden Entlüftungsrohr besteht und daß sich das freie Ende des Entlüftungsrohres über den maximalen Füllstand des Frischwasserbehälters hinaus erstreckt. Gleichzeitig kann die beim Füllvorgang des Boilers und beim Entlüftungsvorgang entstehende Luft in die Atmosphäre entweichen.

Bei einer bevorzugten Ausführungsform des erfindungsgemäßen Geräts ist vorgesehen, daß die Ventileinrichtung Mittel aufweist, die die Verbindungsleitung bei vollständig gefülltem Boiler durch Auftriebskräfte und bei niedrigem Füllstand durch Dampfüberdruck sperren. Hierdurch wird ein sicheres Schließen der Ventileinrichtung sowohl bei gänzlich gefülltem wie bei teilweise gefülltem Boiler erreicht, was ebenfalls die schubweise Heißwasserförderung beschleunigt. Dabei werden die Mittel der Ventileinrichtung einerseits aus einem durch eine Ventilkugel schließbaren Ventilsitz und andererseits auf der dem Ventilsitz abgekehrten Seite der Ventilkugel durch einen gegen die Ventilkugel bewegbaren Antriebskörper gebildet, wobei letzterer den Auftrieb und den Strömungswiderstand in Schließrichtung der Ventileinrichtung erhöhen. Hierdurch wird das Schließverfahren des Schwimmerventils verbessert und eine Beeinträchtigung der Ventilfunktion durch Mehrphasenströmungen unterbunden.

Eine Funktionsverbesserung der den Rückfluß des Wassers in den Frischwasserbehälter verhindernden Ventileinrichtung wird in einer Weiterbildung der Erfindung dadurch erreicht, daß die Ventileinrichtung ein axial durchströmbares Ventilgehäuse aufweist, das eine an den Ventilsitz angrenzende Ventilkammer bildet, in der die Ventilkugel angeordnet ist, die durch ihr Eigengewicht in einer von dem Ventilsitz abgehobenen Stellung gehalten wird und deren spezifisches Gewicht kleiner als das von Wasser ist und daß der Antriebskörper ebenfalls ein niedrigeres spezifisches Gewicht als Wasser aufweist. Diese Ventileinrichtung beruht auf der Erkenntnis, daß sich der Strömungswiderstand einer für das dichte Schließen eines Ventilsitzes optimal geeigneten Ventilkugel durch die Anordnung eines Antriebskörpers auf der dem Ventilsitz abgekehrten Seite der Ventilkugel erheblich steigern läßt, woraus ein wesentlich empfindlicheres und von den Strömungsmedien unabhängigeres Schließverhalten resultiert.

Die einfache und genaue Herstellbarkeit der den Schließkörper bildenden Ventilkugel wird hierbei nicht beeinträchtigt und der durch die Anordnung des Antriebskörpers erforderliche zusätzliche Bauaufwand ist vergleichsweise gering, da der Antriebskörper und die Ventilkugel nicht miteinander verbunden sein müssen. In Durchflußrichtung ergeben sich bei dem Ventil stabile Druckbereiche an der Ventilkugel und dem Antriebskörper, so daß das bei bekannten Kugelrückschlagventilen nachteilige Flattern in Durchflußrichtung vermieden wird. Neben dem strömungsabhängigen Schließen ist auch ein Schließen der Ventileinrichtung durch Auftriebskräfte möglich, da mit Hilfe des Antriebskörpers eine Erhöhung der Auftriebskraft erreicht werden kann.

In einer bevorzugten Ausgestaltung der Erfindung hat der Antriebskörper die Form eines Zylinders, dessen Längsachse in Strömungsrichtung verläuft. Der Strömungswiderstand eines Zylinders ist bei gleichem Strömungsquerschnitt erheblich größer als der einer Kugel. Zusätzlich bewirkt der Zylinder eine Verlagerung des in Strömungsrichtung gesehen vorderen Staupunkts der Ventilkugel, wodurch auch an der Ventilkugel eine Erhöhung der in Schließrichtung wirkenden Strömungskraft erzeugt wird.

Für einen günstigen Strömungsverlauf ist es weiterhin vorteilhaft, wenn die der Ventilkugel benachbarte Stirnseite des zylindrischen Auftriebskörpers als Halbkugel ausgebildet ist. Hierdurch wird vor allem der Strömungswiderstand des besagten Ventils in Ventilöffnungsrichtung vermindert.

Weiterhin kann nach einer Weiterbildung der Erfindung vorgesehen sein, daß die der Ventilkugel abgekehrte Stirnseite des zylindrischen Antriebskörpers als Kugelkalotte ausgebildet ist, um in Ventilschließrichtung den Strömungswiderstand des Antriebskörpers zusätzlich zu erhöhen.

Um die Ventilkugel und den Antriebskörper in der Ventilkammer zu lagern und in der erforderlichen Weise zueinander auszurichten, kann in vorteilhafter Weise vorgesehen sein, daß die Ventilkugel und der Antriebskörper an Führungsstegen geführt sind, die sich längs der zylindrischen Wand der Ventilkammer erstrecken.

Die Erfindung wird nachfolgend anhand eines Ausführungsbeispiels näher erläutert, das in der Zeichnung dargestellt ist. Die Zeichnung zeigt
- Fig. 1: eine schematische Darstellung eines teilweise geschnittenen Geräts zur Zubereitung heißer Getränke,
- Fig. 2: eine Teilansicht einer Variante der Boilerheizeinrichtung,
- Fig. 3: eine Teilansicht einer weiteren Variante der Boilerheizeinrichtung,
- Fig. 4: einen Längsschnitt durch die in Fig. 1 dargestellte, als Rückschlagventil dienende Ventileinrichtung,
- Fig. 5: eine schematische Darstellung der Strömungsverhältnisse an einer einzelnen Ventilkugel ohne den in Fig. 6 zusätzlich noch wirkenden Antriebskörper und
- Fig. 6: eine schematische Darstellung der Strömungsverhältnisse beim Zusammenwirken von Ventilkugel und Antriebskörper des vorgeschlagenen Ventils in dem Gerät nach Fig. 1.

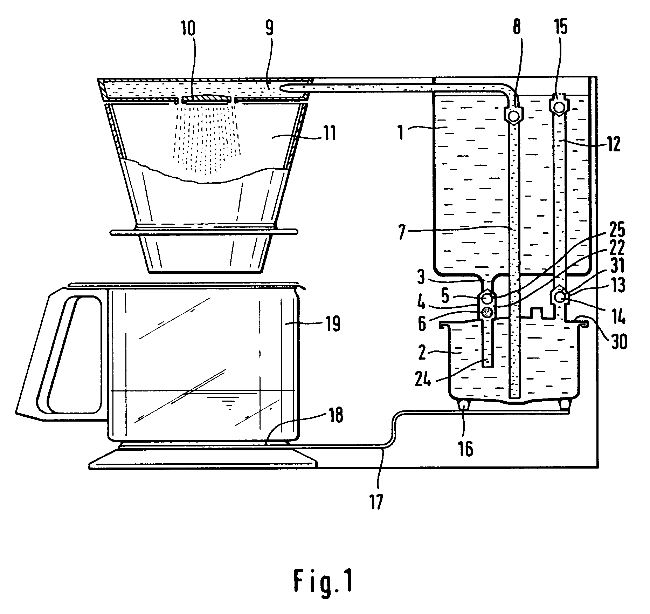

Figur 1 zeigt ein erfindungsgemäßes Gerät zum Zubereiten von Kaffee mit einem Frischwasserbehälter 1, in den bei Ingebrauchnahme des Geräts Leitungswasser eingefüllt wird. Der Frischwasserbehälter 1 kann fest installiert oder zur leichteren Handhabung beim Befüllen mit Wasser abnehmbar ausgestaltet sein. Durch eine zwischen dem Boden des Frischwasserbehälters 1 und dem Deckel eines unterhalb des Frischwasserbehälters 1 angeordneten Boilers 2 befindliche Verbindungsleitung 3 gelangt das Wasser in den Boiler 2, dessen Volumen ein Bruchteil des Volumens des Frischwasserbehälters 1 beträgt. In der Verbindungsleitung 3 befindet sich eine Ventileinrichtung 4 mit einer Ventilkugel 5 und einem unter dieser angeordneten Antriebskörper 6 als Schwimmkörper, der über die Verbindungsleitung 24 mit dem Boiler 2 verbunden ist.

Die Ventileinrichtung 4 sperrt die Verbindungsleitung 3 in Richtung auf den Frischwasserbehälter 1, wenn der Boiler 2 voll mit Wasser gefüllt ist und auch wenn durch einen Druckanstieg im Boiler 2 die Ventileinrichtung 4 mit Wasser, Dampf oder einem Wasser-Dampf-Gemisch angeströmt wird.

In den Boiler 2 ragt nach Fig. 1 ferner ein Steigrohr 7 hinein, welches in geringem Abstand über dem Boden des Boilers 2 endet. Im Steigrohr 7 ist oberhalb der Ventileinrichtung 4 ein als Rückschlagventil wirkendes Ventil 8 angeordnet, welches in Richtung auf den Boiler 2 schließt. Das Steigrohr 7 mündet in eine Kammer 9, deren Boden 10 siebartig ausgebildet ist, wodurch das über das Steigrohr 7 zugeführte Wasser, wie bei einer Dusche, in den darunter befindlichen Filter 11 fließt. Der Filter 11 dient zur Aufnahme eines Extrahiergutes, wie beispielsweise Kaffeemehl oder Teeblätter, und ist so bemessen, daß er das Volumen des im Boiler 2 aufgeheizten Wassers aufnehmen kann.

An den Deckel 30 des Boilers 2 ist eine Verbindung 12 als Entlüftungsrohr angeschlossen, die sich nach oben durch den Boden des Frischwasserbehälters 1 erstreckt und das bis zu dessen oberen Rand oberhalb des maximalen Füllstandes verläuft. Durch das Entlüftungsrohr 12 kann Luft aus dem Boiler 2 entweichen. Im Entlüftungsrohr 12 befindet sich in Nähe des Boilers 2 ein Entlüftungsventil 13, dessen Ventilkugel 14 schwerer als Wasser ist und die beim Schließen des Entlüftungsventils 13 gegen den Dichtsitz 31 gedrückt wird. Das Entlüftungsventil 13 ist in seiner Grundstellung offen und schließt in Abhängigkeit von der Strömungsgeschwindigkeit des aus dem Boiler 2 entweichenden Mediums. Es ist so bemessen, daß es durch die beim Füllen des Boilers 2 entweichende Luft nicht geschlossen werden kann, sondern erst bei Siedebeginn im Boiler 2 durch die dann deutlich zunehmende Strömungsgeschwindigkeit des entweichenden Dampfes. Durch das Entlüftungsrohr 12 kann auch sich bei Beginn des Aufheizvorgangs ausdehnendes Wasser aus dem Boiler 2 abfließen und im Frischwasserbehälter 1 aufgefangen werden. Oberhalb des Entlüftungsventils 13 ist im Entlüftungsrohr 12 ein durch Schwerkraft in Richtung auf den Boiler 2 schließendes Ventil 15 als Rückschlagventil angeordnet.

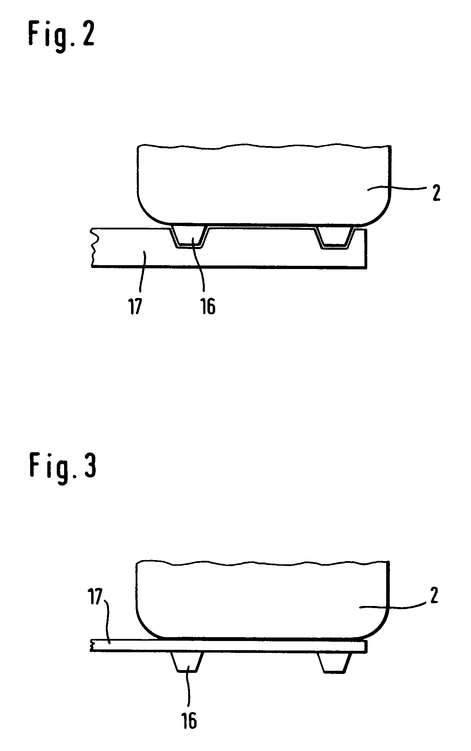

Der Boiler 2 wird durch eine an seinem Boden angeordnete elektrische Heizspirale 16 beheizt. Unterhalb der Heizspirale 16 befindet sich ein Wärmeleitelement 17, das sich bis unterhalb des Filters 11 erstreckt und dort als Warmhalteplatte 18 für eine Glaskanne 19 zur Aufnahme des Filtrats ausgebildet ist. Bei dieser Ausführungsform ist die Heizspirale 16 mit dem Boiler 2 fest verbunden und auf das Wärmeleitelement 17 aufgestellt. Die Heizspirale 16 kann auch in eine Vertiefung des Wärmeleitelements 17 eingesetzt sein, wie in Figur 2 dargestellt.

Bei dem in Figur 3 gezeigten Ausführungsbeispiel ist die Heizspirale 16 mit dem Wärmeleitelement 17 fest verbunden, wobei sie sich auf der Unterseite des Wärmeleitelements 17 befindet. Das Wärmeleitelement 17 bildet somit eine Heizplatte, auf der der Boiler 2 ruht. Aufgrund des Temperaturabfalls im Wärmeleitelement 17 ergibt sich an der Warmhalteplatte eine geeignet niedrigere Temperatur.

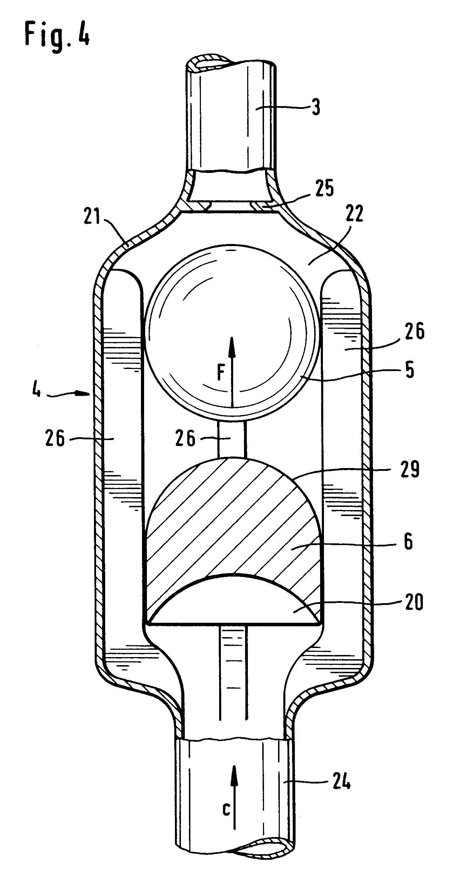

Die in Fig. 1 dargestellte Ventileinrichtung 4 besteht nach Fig. 4 aus einem Ventilgehäuse 21, das eine im wesentlichen zylindrische Ventilkammer 22 enthält, die an ihren entgegengesetzten Enden jeweils mit einer rohrförmigen Verbindungsleitung 3, 24 in Verbindung steht, wie dies auch Fig. 1 zeigt. In der der Verbindungsleitung 3 benachbarten Stirnwand der Ventilkammer 22 ist nach den Figuren 1 und 4 ein kreisringförmiger Ventilsitz 25 angeordnet. An der zylindrischen Längswand der Ventilkammer 22 sind nach Fig. 4 mehrere, sich in Längsrichtung erstreckende Führungsstege 26 vorgesehen. An den Führungsstegen 26 sind eine dem Ventilsitz 25 benachbarte Ventilkugel 5 und ein mit der Ventilkugel 5 zusammenwirkender Antriebskörper 6 axial verschiebbar gelagert. Der im Schnitt dargestellte Antriebskörper 6 hat die Form eines Zylinders, dessen Durchmesser dem Durchmesser der Ventilkugel 5 entspricht. Die der Ventilkugel 5 benachbarte Stirnwand des Antriebskörpers 6 wird durch eine Halbkugel 29 gebildet. Die entgegengesetzte Stirnwand des Antriebskörpers 6 ist als Kugelkalotte 20 ausgebildet.

Die dargestellte Ventileinrichtung 4 soll hierbei sowohl durch Auftrieb als auch durch Strömungskräfte geschlossen werden. Die Ventilkugel 5 und der Antriebskörper 6 sind daher als Schwimmkörper ausgebildet, deren Dichte weniger als 1 g/cm³ beträgt. Ein geeigneter Werkstoff zur Herstellung der Ventilkugel 5 und des Antriebskörpers 6 ist beispielsweise Polypropylen mit einer Dichte von ca. 0,9 g/cm³.

Das beschriebene Gerät hat folgende Wirkungsweise:
Wird nach Fig. 1 Wasser in den Frischwasserbehälter 1 eingefüllt, so füllt sich der Boiler 2 über die Verbindungsleitung 3, die geöffnete Ventileinrichtung 4 und die sich anschließende Verbindungsleitung 24. Die sich im Boiler 2 befindende Luft kann beim Einfließen von Wasser durch das Entlüftungsrohr 12 über das Entlüftungsventil 13 und das Rückschlagventil 15 in den Frischwasserbehälter 1 entweichen. Sobald der Boiler 2 voll mit Wasser gefüllt ist, schließt durch Auftriebskraft die Ventileinrichtung 4. Ist also die Ventilkammer 22 mit einem Medium ausreichender Dichte, beispielsweise Wasser gefüllt, so wird die Ventilkugel 5 durch ihren eigenen Auftrieb und den Auftrieb des Antriebskörpers 6 gegen den Ventilsitz 25 gedrückt. Die Schließkraft entspricht somit der Summe beider Auftriebskräfte und ist damit etwa doppelt so groß wie die Schließkraft, die lediglich mit einer einzigen Ventilkugel erreichbar wäre.

Durch Betätigen des Geräteschalters wird der Boiler 2 durch die Heizspirale 16 beheizt. Durch die Erwärmung dehnt sich das Wasser im Boiler 2 aus. Das überschüssige Wasser kann durch das Entlüftungsrohr 12 austreten und im Frischwasserbehälter 1 aufgefangen werden. Bei Siedebeginn des Wassers im Boiler 2 nimmt die Strömungsgeschwindigkeit im Entlüftungsrohr 12 infolge der Dampfbildung deutlich zu und das Entlüftungsventil 13, dessen Ventilkugel 14 eine höhere Dichte als Wasser hat und daher bis jetzt offen war, schlägt nun am Dichtsitz 31 an und schließt das Ventil 13. Dadurch sinkt die Strömungsgeschwindigkeit im Entlüftungsrohr 12 auf Null und es baut sich im Boiler 2 ein Überdruck auf, der das Entlüftungsventil 13 weiterhin geschlossen hält. Der zunehmende Überdruck im Boiler 2 öffnet das bis dahin durch Schwerkraft geschlossene Rückschlagventil 8 im Steigrohr 7 und fördert das siedende Wasser in einem Schub rasch und vollständig durch das Steigrohr 7 und das Rückschlagventil 8 in die Kammer 9 und von dort durch den siebartigen Einsatz am Boden 10 der Kammer 9 in den Filter 11. Das schwallartig in den Filter 11 geleitete Wasser wirbelt das im Filter 11 befindliche Extrahiergut auf und durchflutet dieses intensiv und vollständig.

Durch die vollständige Verdrängung des Heißwassers aus dem Boiler 2 stellt sich nun ein Druckgleichgewicht zwischen dem Frischwasserbehälter 1 und dem Boiler 2 ein. Durch hydrostastatischen Druck der noch im Frischwasserbehälter 1 befindlichen Wassermenge öffnet die Ventileinrichtung 4 und Frischwasser kann über die Verbindungsleitung 3 in den Boiler 2 fließen. Dabei bildet sich bei Eintreten des kalten Wassers in den mit Dampf gefüllten Boiler 2 durch Kondensation ein Vakuum im Boiler 2 aus und die Rückschlagventile 8 und 15 schließen. Das Vakuum kann sich daher nur über die Verbindungsleitung 3 abbauen; das Wasser aus dem Frischwassertank 1 wird daher zügig angesaugt und der Boiler 2 wieder gefüllt.

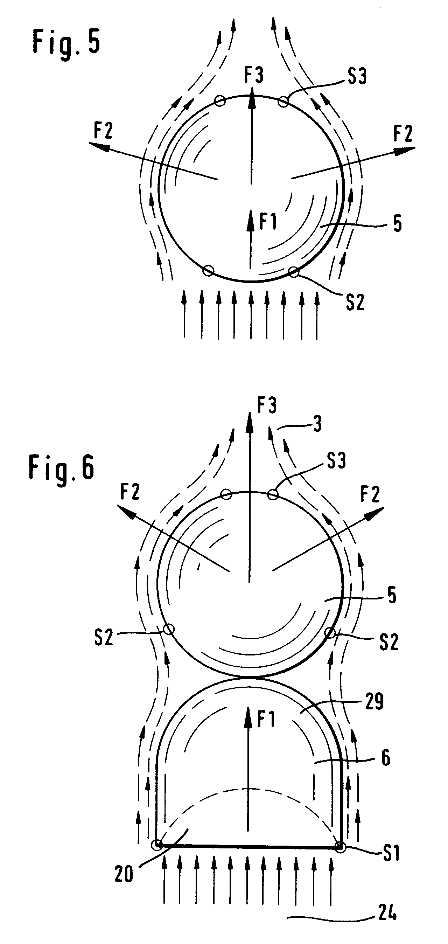

Der beschriebene Funktionsablauf wiederholt sich in analoger Weise so oft, bis der Boiler 2 nicht mehr vollständig, sondern nur noch mit einer verbliebenen Restmenge aus dem Frischwassertank 1 gefüllt werden kann. Nun kann die Ventileinrichtung 4 nicht mehr durch eine Auftriebskraft geschlossen werden, sondern bleibt zunächst in Offenstellung. Ist die Dichte des Mediums in der Ventilkammer 22 geringer als die der Ventilkugel 5 und des Auftriebskörpers 6, so kann die Ventileinrichtung 4 durch die Wirkung einer Strömungskraft geschlossen werden. Dies ist beispielsweise der Fall, wenn die Ventilkammer 22 bei der Kaffee-maschine nach Fig. 1 mit Luft oder Dampf durchströmt wird. Die den Schließvorgang auslösenden Strömungskräfte sind zur besseren Erläuterung in Figur 6 veranschaulicht.

Der über den Anschlußstutzen 24 in die Ventilkammer 22 einströmende Dampf beaufschlagt nach Fig. 1, 4 und 6 dabei zunächst die Kugelkalotte 20 des Antriebskörpers 6, wodurch sich ein Staudruck bildet, der eine Druckwiderstandskraft F1 (Fig. 6) hervorruft. Durch die konkave Kalottenform des Antriebskörpers 6 befinden sich die Staupunkte auf der Mantellinie des Zylinders, so daß der Staudruck auf die gesamte projezierte Stirnfläche des Antriebskörpers 6 wirkt. Die Gestaltung der Anströmfläche als Kugelkalotte und mit einem entsprechend hohen c-Wert erhöht die Druckwiderstandskraft F1 etwa auf das Dreifache einer Kugel.

Nach dem Passieren der Kugelkalotte 20 umströmt das Medium nach Fig. 1, 5 und 6 den Antriebskörper 6 und die Ventilkugel 5. Hierbei ergeben sich durch die Strömungsablenkung an der Ventilkugel 5 dynamische Kräfte F2, die in Strömungsrichtung geneigt, aber radial zum Kugelmittelpunkt verlaufen. Die Neigung der dynamischen Kräfte F2 wird dabei von den Staupunkten S2, S2 bestimmt. Die dynamischen Kräfte F2 addieren sich zu einer resultierenden dynamischen Kraft F3, die in Schließrichtung wirksam ist.

Betrachtet man im Vergleich zu der vorgeschlagenen Ventileinrichtug 4 die Schließkräfte an einer angeströmten Einzelkugel, so wird der Grad der Verbesserung der Schließwirkung deutlich. Wie aus Figur 5 zu ersehen, liegen die Staupunkte S2 auf der Anströmseite bei einer Einzelkugel wesentlich enger beieinander. Die Druckwiderstandskraft ist daher erheblich geringer und die dynamischen Kräfte F2 sind weit geringer in Strömungsrichtung geneigt, so daß auch die resultierende Kraft F3 viel kleiner ausfällt. Durch das Zusammenwirken der Ventilkugel 5 und des Antriebskörpers 6 wird demgegenüber eine erhebliche Steigerung der strömungsbedingten Schließkräfte erreicht, die das etwa doppelte Gewicht aus der Ventilkugel 5 und dem Antriebskörpers 6 bei weitem kompensieren.

Die beschriebene Ventileinrichtung 4 eignet sich bei dem Gerät nach Fig. 1 zum Zubereiten heißer Getränke besonders gut. Dabei werden erheblich sichere Öffnungs- und Schließzustände erreicht, so daß besonders schlagartig und schubweise heißes Wasser über das Steigrohr 7 in den Filter 11 gelangt (Fig. 1).

Nach Schließen der Ventileinrichtung 4 und des Rückschlagventils 13 wird erneut das Rückschlagventil 8 geöffnet und es wird das im Boiler 2 befindliche Restwasser durch den Druck des Dampfes über das Steigrohr 7 in die Kammer 9 entleert. Nach vollständigem Entleeren des Boilers 2 gelangt die Ventileinrichtung 4 wieder in Offenstellung. Der Boiler 2 wird hierüber belüftet. Die Heizspirale 16 wird durch einen Thermoschalter bekannter Bauart ausgeschaltet, wenn kein Wasser mehr in den Boiler 2 fließt, d.h., wenn der Frischwasserbehälter 1 leer ist.

## Patentansprüche

1. Gerät zum Zubereiten von heißen Getränken, wie Kaffee, Tee und dergleichen, mit einem Frischwasserbehälter (1), einem Filter (11) zur Aufnahme eines Extrahiergutes, wie beispielsweise Kaffeemehl oder Teeblätter, aus dem das heiße Getränk in ein Auffanggefäß (19) abfließt, wobei die Herstellung des heißen Getränkes dadurch erfolgt, daß schubweise so oft Frischwasser aus dem Frischwasserbehälter (1) über eine Verbindungsleitung (3) in einen geschlossenen Boiler (2) fließt, dort von einer Wärmequelle (16) erhitzt und danach über ein Steigrohr (7) dem Filter (11) zugeführt wird, bis der Frischwasserbehälter (1) entleert ist, wobei weiter in der Verbindungsleitung (3) eine Ventileinrichtung (4) angeordnet ist, mit der diese in Richtung des Frischwasserbehälters (1) sperrbar ist und wobei der Boiler (2) eine Verbindung (12) zur Atmosphäre aufweist, in der ein in seiner Grundstellung offenes Entlüftungsventil (13) angeordnet ist, das in Abhängigkeit von der Strömungsgeschwindigkeit des durch die Verbindung (12) aus dem Boiler (2) entweichenden Mediums in seine Schließstellung gelangt,
**dadurch gekennzeichnet**,
daß im Steigrohr (7) ein Ventil (8) und daß in der Verbindung (12) ein weiteres, dem Entlüftungsventil (13) nachgeschaltetes Ventil (15) angeordnet sind und daß beide Ventile (8, 15) bei einem im Boiler (2) entstehenden Unterdruck in ihrer Schließstellung gehalten werden.

2. Gerät nach Anspruch 1,
**dadurch gekennzeichnet**,
daß beide Ventile (8, 15) Rückschlagventile sind, die bei Unterdruck im Boiler (2) den Eintritt von Luft verhindern.

3. Gerät nach Anspruch 2,
**dadurch gekennzeichnet**,
daß die Verbindung (12) aus einem innerhalb des Frischwasserbehälters (1) verlaufenden Entlüftungsrohr (12) besteht und daß sich das freie Ende des Entlüftungsrohres (12) über den maximalen Füllstand des Frischwasserbehälters (1) hinaus erstreckt.

4. Gerät nach Anspruch 1,
**dadurch gekennzeichnet**,
daß die Ventileinrichtung (4) Mittel (5, 6) aufweist, die die Verbindungsleitung (3) bei vollständig gefülltem Boiler (2) durch Auftriebskräfte und bei niedrigem Füllstand durch Dampfüberdruck sperren.

5. Gerät nach Anspruch 4,
**dadurch gekennzeichnet**,
daß die Mittel (5, 6) der Ventileinrichtung (4) einerseits aus einem durch eine Ventilkugel (5) schließbaren Ventilsitz (25) und andererseits auf der dem Ventilsitz (25) abgekehrten Seite der Ventilkugel (5) durch einen gegen die Ventilkugel (5) bewegbaren Antriebskörper (6) gebildet werden, wobei letzterer den Auftrieb und den Strömungswiderstand in Schließrichtung der Ventileinrichtung (4) erhöhen.

6. Gerät nach Anspruch 5,
**dadurch gekennzeichnet**,
daß die Ventileinrichtung (4) ein axial durchströmbares Ventilgehäuse (21) aufweist, das eine an den Ventilsitz (25) angrenzende Ventilkammer (22) bildet, in der die Ventilkugel (5) angeordnet ist, die durch ihr Eigengewicht in einer von dem Ventilsitz (25) abgehobenen Stellung gehalten wird und deren spezifisches Gewicht kleiner als das von Wasser ist und daß der Antriebskörper (6) ebenfalls ein niedrigeres spezifisches Gewicht als Wasser aufweist.

7. Gerät nach Anspruch 6,
**dadurch gekennzeichnet**,
daß der Antriebskörper (6) die Form eines Zylinders hat, dessen Längsachse in Strömungsrichtung verläuft.

8. Gerät nach Anspruch 7,
**dadurch gekennzeichnet**,
daß die der Ventilkugel (5) benachbarte Stirnseite des zylindrischen Antriebskörpers (6) als Halbkugel (29) ausgebildet ist.

9. Gerät nach Anspruch 8,
**dadurch gekennzeichnet**,
daß die der Ventilkugel (5) abgekehrte Stirnseite des zylindrischen Antriebskörpers (6) als Kugelkalotte (20) ausgebildet ist.

10. Gerät nach Anspruch 6,
**dadurch gekennzeichnet**,
daß die Ventilkugel (5) und der Antriebskörper (6) an Führungsstegen (26) geführt sind, die sich längs der zylindrischen Wand der Ventilkammer (22) erstrecken.

## Claims

1. An apparatus for the preparation of hot beverages such as coffee, tea and the like, with a fresh water reservoir (1), a filtering means (11) for receiving a material to be extracted as, for example, coffee grinds or tea leaves, from which the hot beverage is discharged into a collection container (19), the production of the hot beverage being effected by causing batches of fresh water to flow from the fresh water reservoir (1) through a connecting conduit (3) into a closed boiler vessel (2) where it is heated by a heat source (16) and is subsequently supplied to the filtering means (11) through a riser (7), such process being repeated until the fresh water reservoir (1) is evacuated, with the connecting conduit (3) further accommodating a valve device (4) that is adapted to block flow of fluid in the direction of the fresh water reservoir (1), and with the boiler vessel (2) including a connecting means (12) to atmosphere in which a normally open vent valve (13) is disposed which reaches its closed position in dependence upon the rate of flow of the fluid escaping from the boiler vessel (2) through the connecting means (12),
**characterized in that** a valve structure (8) is arranged in the riser (7), that a further valve structure (15) is arranged in the connecting means (12) downstream of the vent valve (13), and that both valve structures (8, 15) are maintained in their closed positions when a pressure below atmospheric occurs in the boiler vessel (2).

2. The apparatus as claimed in claim 1,
**characterized in that** both valve structures (8, 15) are check valves preventing the admission of air when the pressure in the boiler vessel (2) is below atmospheric.

3. The apparatus as claimed in claim 2,
**characterized in that** the connecting means (12) is a vent tube (12) extending in the interior of the fresh water reservoir (1), and that the free end of the vent tube (12) extends over and beyond the maximum filling level of the fresh water reservoir (1).

4. The apparatus as claimed in claim 1,
**characterized in that** the valve device (4) includes means (5, 6) that inhibit flow through the connecting conduit (3) with the boiler vessel (2) filled to capacity by virtue of buoyant forces, while inhibiting flow at a low filling level by virtue of steam pressure above atmospheric.

5. The apparatus as claimed in claim 4,
**characterized in that** the means (5, 6) of the valve device (4) include a valve seat (25) closable by a valve ball (5) on one side, and an actuating device (6) movable against the valve ball (5) on the side of the valve ball (5) facing away from the valve seat (25) on the other side, said actuating device increasing the buoyancy and the flow resistance in the closing direction of the valve device (4).

6. The apparatus as claimed in claim 5,
**characterized in that** the valve device (4) includes a valve housing (21) through which fluid is adapted to flow axially and which provides a valve chamber (22) adjoining the valve seat (25) and receiving therein the valve ball (5) which is maintained in a position in which it is lifted clear of the valve seat (25) by its own weight and which has a specific weight less than that of water, and that the actuating device (6) has a specific weight equally less than that of water.

7. The apparatus as claimed in claim 6,
**characterized in that** the actuating device (6) has the form of a cylinder whose longitudinal axis extends in the direction of flow.

8. The apparatus as claimed in claim 7,
**characterized in that** the end of the cylindrical actuating device (6) adjacent to the valve ball (5) is configured as a hemisphere (29).

9. The apparatus as claimed in claim 8,
**characterized in that** the end of the cylindrical actuating device (6) facing away from the valve ball (5) is configured as a calotte shell (20).

10. The apparatus as claimed in claim 6,
**characterized in that** the valve ball (5) and the actuating device (6) are guided on guide ribs (26) extending along the cylindrical wall of the valve chamber (22).

## Revendications

1. Appareil pour la préparation de boissons chaudes telles que du café, du thé ou similaire, comportant un réservoir d'eau fraîche (1), un filtre (11) destiné à recevoir le produit à extraire, tel que par exemple de la poudre de café ou des feuilles de thé, depuis lequel la boisson chaude s'écoule dans un réceptacle (19), la préparation de la boisson chaude étant produite grâce au fait que de l'eau fraîche s'écoule aussi souvent par à-coups depuis le réservoir d'eau fraîche (1) par l'intermédiaire d'une conduite de liaison (3) dans un chauffe-eau (2) fermé où elle est chauffée par une source de chaleur (16), et est amenée de là au filtre (11) par l'intermédiaire d'un tube de montée (7) jusqu'à ce que le réservoir d'eau fraîche (1) soit vidé, une soupape (4) agencée en outre dans la conduite de liaison (3) permettant de bloquer celle-ci en direction du réservoir d'eau fraîche (1), et le chauffe-eau (2) présentant une liaison (12) vers l'atmosphère, dans laquelle est agencée une soupape de purge (13) ouverte dans sa position de base, qui parvient dans sa position de fermeture en fonction de la vitesse d'écoulement du fluide s'échappant du chauffe-eau (2) par la liaison (12), caractérisé en ce qu'une soupape (8) est agencée dans le tube de montée (7) et en ce qu'une autre soupape (15) est agencée dans la liaison (12), en aval de la soupape de purge (13), et en ce que les deux soupapes (8, 15) sont maintenues dans leur position de fermeture lorsqu'une dépression s'établit dans le chauffe-eau (2).

2. Appareil selon la revendication 1, caractérisé en ce que les deux soupapes (8, 15) sont des soupapes anti-retour qui empêchent l'entrée d'air lorsqu'une dépression règne dans le chauffe-eau (2).

3. Appareil selon la revendication 2, caractérisé en ce que la liaison (12) est formée par un tube de purge (12) s'étendant à l'intérieur du réservoir d'eau fraîche (1) et en ce que l'extrémité libre du tube de purge (12) s'étend au-delà du niveau de remplissage maximal du réservoir d'eau fraîche (1).

4. Appareil selon la revendication 1, caractérisé en ce que la soupape (4) comprend des organes (5, 6) qui bloquent la conduite de liaison (3) par des forces montantes lorsque le chauffe-eau (2) est totalement rempli, et par surpression de vapeur lorsque le niveau de remplissage est bas.

5. Appareil selon la revendication 4, caractérisé en ce que les organes (5, 6) de la soupape (4) sont formés d'une part par un siège de soupape (25) susceptible d'être fermé par une bille de soupape (5) et d'autre part, sur le côté de la bille de soupape (5) qui est détourné du siège de soupape (25), par un organe d'entraînement (6) déplaçable à l'encontre de la bille de soupape (5), ledit organe d'entraînement augmentant la force montante et la résistance à l'écoulement en direction de fermeture de la soupape (4).

6. Appareil selon la revendication 5, caractérisé en ce que la soupape (4) présente un boîtier de soupape (21) à traversée axiale qui forme une chambre de soupape (22) adjacente au siège de soupape (25), dans laquelle est agencée la bille de soupape (5) qui est maintenue grâce à son propre poids dans une position de soulèvement par rapport au siège de soupape (25) et dont le poids spécifique est inférieur à celui de l'eau et en ce que l'organe d'entraînement (6) présente également un poids spécifique inférieur à celui de l'eau.

7. Appareil selon la revendication 6, caractérisé en ce que l'organe d'entraînement (6) a la forme d'un cylindre dont l'axe longitudinal s'étend dans la direction d'écoulement.

8. Appareil selon la revendication 7, caractérisé en ce que la face frontale de l'organe d'entraînement cylindrique (6) qui est voisine de la bille de soupape (5) est réalisée sous forme d'hémisphère (29).

9. Appareil selon la revendication 8, caractérisé en ce que la face frontale de l'organe d'entraînement cylindrique (6) qui est détournée de la bille de soupape (5) est réalisée sous forme de calotte sphérique (20).

10. Appareil selon la revendication 6, caractérisé en ce que la bille de soupape (5) et l'organe d'entraînement (6) sont guidés sur des baguettes de guidage (26) qui s'étendent le long de la paroi cylindrique de la chambre de soupape (22).
